(19) Europäisches Patentamt
European Patent Office
Office européen des brevets

(11) EP 0 905 203 A1

(12) EUROPÄISCHE PATENTANMELDUNG

(43) Veröffentlichungstag:
31.03.1999 Patentblatt 1999/13

(51) Int. Cl.⁶: **C09C 1/00**, C03C 8/20,
C03C 8/14

(21) Anmeldenummer: 98116290.2

(22) Anmeldetag: 28.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 26.09.1997 DE 19742522

(71) Anmelder:
CERDEC AKTIENGESELLSCHAFT
KERAMISCHE FARBEN
D-60327 Frankfurt (DE)

(72) Erfinder:
• Speer, Dietrich, Dr.
  63505 Langenselbold (DE)
• Jarnicki, Holger
  65558 Eppenrod (DE)
• Huber, Adalbert, Dr.
  63225 Langen (DE)

(54) **Zirkonpigmente enthaltende keramische Dekorfarben mit erhöhter Buntheit, Verfahren zu ihrer Herstellung und ihre Verwendung**

(57) Erfindungsgemäße keramische Dekorfarben, bestehend aus im wesentlichen einem Zirkonpigment vom Wirtsgitter- oder Einschlußtyp und einem Glasfluß bei einer Pigmentvolumenkonzentration (PVK) von mindestens 30 %, weisen eine erhöhte Buntheit C* auf, wenn der Glasfluß mindestens 71 Gew.-% PbO enthält. Bevorzugte Dekorfarben weisen eine PVK im Bereich von 40 bis 70 % und einen PbO-Gehalt von 75 bis 85 Gew.-% auf. Die Dekorfarben eignen sich besonders zur Herstellung von bei 1000 bis 1250 °C eingebrannten Dekoren mit erhöhter Buntheit C*.

EP 0 905 203 A1

Printed by Xerox (UK) Business Services
2.16.7/3.6

## Beschreibung

Die Erfindung betrifft keramische Dekorfarben mit erhöhter Buntheit (Chromawert C* nach DIN 5033), bestehend im wesentlichen aus einem Zirkonpigment vom Wirtsgitter- oder Einschlußtyp und einem Glasfluß aus einem oder mehreren Glasfritten, wobei die Pigmentvolumenkonzentration (PVK) mindestens 30 % beträgt. Die Erfindung richtet sich ferner auf ein Verfahren zur Herstellung der Dekorfarben sowie auf ihre Verwendung, bei welcher es sich insbesondere um die Herstellung von bei über 1000 °C, insbesondere 1100 bis 1250 °C, eingebrannten keramischen Dekoren handelt.

Dekorfarben für die Herstellung keramischer Dekore sind bekannt. Sie bestehen üblicherweise im wesentlichen aus einem oder mehreren Pigmenten und einem Glasfluß aus einer oder mehreren Glasfritten. Die Dekorfarbe entsteht durch intensives Vermahlen der Bestandteile (siehe Ullmann's Enzyklopädie der technischen Chemie, 4. Auflage (1977), Band 14, S. 9-10).

Der Markt verlangt nach möglichst farbkräftigen, brillanten Dekoren, wobei im Hochtemperaturbrand gebrannte Dekore an Bedeutung gewinnen. An hierfür geeignete Dekorfarben werden bezüglich thermischer Stabilität hohe Anforderungen gestellt. Eine thermisch stabile Pigmentklasse sind die sogenannten Zirkonpigmente, wobei es sich um Wirtsgitterpigmente, wie Zirkon-Praseodym-Gelb, Zirkon-Vanadium-Blau und Zirkoneisenrosa, und Zirkon-Einschlußpigmente handelt, in welchen färbende Kristalle, wie insbesondere Cadmiumsulfid oder Cadmiumsulfoselenide, in Zirkoniumsilikat (= Zirkon) eingeschlossen sind (loc cit. Seiten 2-3). Die Farbstärke einer Dekorfarbe, also deren Buntheit, wird im CIE-Lab-System (DIN 5033, Teil 3) als Chromawert C* angegeben, wobei gilt: $C^* = (a^2 + b^2)^{0,5}$ und soll bei richtigem Farbton möglichst hoch sein. Der C*-Wert kann durch Erhöhung der Pigmentvolumenkonzentration (Vol-% Pigment in der ausgeschmolzenen Dekorfarbe) erhöht werden, jedoch besteht Interesse daran, bei gegebener PVK den C*-Wert weiter zu erhöhen.

Die Aufgabe der Erfindung besteht darin, einen Weg aufzuzeigen, womit in einfacher Weise der C*-Wert bei einer PVK von mindestens 30 % zu erhöhen ist.

Es wurde gefunden, daß durch die Verwendung eines Glasflusses mit einem sehr hohen PbO-Gehalt überraschenderweise höhere C*-Werte der bei über 1000 °C eingebrannten Dekorfarbe erhalten werden als mit einem Glasfluß mit niedrigen oder mittleren PbO-Gehalten. Gegenstand der Erfindung ist demgemäß eine keramische Dekorfarbe mit erhöhter Buntheit C*, bestehend aus im wesentlichen einem Zirkonpigment vom Wirtsgitter- oder Einschlußtyp und einem Glasfluß aus einer oder mehreren Glasfritten, wobei die Pigmentvolumenkonzentration (PVK) mindestens 30 % beträgt, die dadurch gekennzeichnet ist, daß der Glasfluß mindestens 71 Gew.-% Bleioxid (PbO) enthält.

Der Glasfluß bevorzugter Dekorfarben enthält 75 bis 85 Gew.-% Bleioxid. Bevorzugte Zirkonpigmente sind die einleitend genannten Pigmente.

Bei dem Glasfluß handelt es sich um an sich bekannte Glaszusammensetzungen mit dem genannten hohen PbO-Gehalt. Die Zusammensetzung des Glases basiert meist auf Bleiborsilikaten, es kann sich aber auch um SiO₂-freie Gläser auf der Basis von Bleiboraten handeln. Während bis zu einem PbO-Gehalt des Glasflusses um 70 Gew.-% der C*-Wert mit zunehmendem PbO-Gehalt nicht oder nur wenig ansteigt - geringe Schwankungen können sich durch andere Glasbestandteile oder eine spezielle Kombination derselben ergeben - nimmt bei einem Gehalt um etwa 70 Gew.-% PbO der C*-Wert des Dekors sprunghaft zu. Durch Verwendung eines derartigen Glasflusses in Form einer Glasfritte ist es somit möglich, farbintensive Dekore zu erhalten.

Die Herstellung der erfindungsgemäßen Dekorfarben erfolgt in an sich bekannter Weise, wobei jedoch ein Glasfluß mit mindestens 71 Gew.-% PbO, vorzugsweise 75 bis 85 Gew.-%, eingesetzt wird.

Die erfindungsgemäßen Dekorfarben können zwar allgemein zur Dekoration von Glas, Porzellan und Keramik verwendet werden, sie sind aber besonders gut geeignet zur Herstellung von Dekoren, wie Inglasurdekoren, auf Porzellan und anderen dichten glasierten keramischen Materialien, welche bei über 1000 °C, meistens 1100 bis 1250 °C, eingebrannt werden.

## Beispiele

In den Beispielen und Vergleichsbeispielen wurden als Glasfluß Glasfritten eingesetzt, deren wesentliche Bestandteile aus der Tabelle folgen:

| Typ | A | B | C | D | E | F | G |
|------|------|------|------|------|------|------|------|
| PbO | 0 | 43,8 | 64,5 | 71,2 | 75,1 | 80,4 | 82,7 |
| SiO₂ | 55,6 | 16,7 | 34,4 | 11,9 | 6,2 | 15,7 | 2,3 |

(fortgesetzt)

| Typ | A | B | C | D | E | F | G |
|---|---|---|---|---|---|---|---|
| $B_2O_3$ | 19,1 | 11,2 | | 16,4 | 17,3 | 3,8 | 13,4 |
| $Al_2O_3$ | 5,6 | 0,5 | 0,6 | 0,3 | | | |
| RO | 0,5 | 27,8 | | | 1,4 * | | 1,6 * |
| $R'_2O$ | 14,0 | - | 0,5 | 0,2 | | | |
| RO = Summe CaO, Sr, BaO und ZnO * | | | | | | | |
| $R'_2O$ = Summe $Li_2O$, $Na_2O$ und $K_2O$ | | | | | | | |

Als Pigmente kamen Zirkon-Praseodym-Gelb, Zirkon-Vanadium-Blau und ein rotes Zirkon-Cd(S,Se)-Einschlußpigment zum Einsatz.

Die Herstellung der Dekorfarben erfolgte in allgemein bekannter Weise durch Vermahlen des Pigments mit dem Glasfluß in einer Kugelmühle in Gegenwart von Ethanol oder $H_2O$ und Trocknen.

Probenpräparation: 10 Gew.-teile Dekorfarbe wurden mit 6 Gew.-teilen Druckmedium (Nr. 80820 der Fa. Cerdec AG) angepastet. Bedruckt wurde ein Druckpapier mittels 100er Nylon-Siebgewebe, überfilmt wurde mit einer Filmlösung (Nr. 80894 der Fa. Cerdec AG). Das Abziehbild wurde auf Porzellanplättchen übertragen. Gebrannt wurde in einem Durchschub-Gasofen, 90 Minuten bei 1180 °C.

**Beispiel 1**

Dekorfarben wurden in bekannter Weise durch Vermahlen eines Zirkon-Praseodym-Pigments mit einer Glasfritte als Glasfluß hergestellt. Variiert wurden die eingesetzten Glasfritten und damit der PbO-Gehalt; hergestellt wurden jeweils Dekorfarben mit einer Pigmentvolumenkonzentration (PVK) von 33 %, 44 % und 55 %. Die eingesetzten Glasfritten (Typ und PbO-Gehalt in Gew.-%), die PVK sowie die Buntheit C* nach DIN 5033, Teil 3 folgen aus der Tabelle.

| PVK (%) | Glasfritte Typ / % PbO | C* |
|---|---|---|
| 33 | / 0 | 45,4 |
| | / 44 | 43,3 |
| | / 65 | 47,4 |
| | / 71 | 44,8 |
| | / 75 | 51,3 |
| | / 80 | 53,1 |
| 44 | / 0 | 53,1 |
| | / 44 | 55,0 |
| | / 65 | 54,2 |
| | / 71 | 54,3 |
| | / 75 | 59,9 |
| | / 80 | 62,7 |
| 55 | / 0 | 54,5 |
| | / 44 | 57,0 |
| | / 65 | 58,0 |
| | / 71 | 61,7 |
| | / 75 | 66,5 |

Die Tabelle zeigt, daß die Buntheit bei einem PbO-Gehalt ab etwa 71 Gew.-% mit weiter steigendem PbO-Gehalt sprunghaft ansteigt.

**Beispiel 2**

Analog Beispiel 1 wurden blaue Dekorfarben hergestellt und getestet. Als Pigment wurde Zirkon-Vanadium-Blau eingesetzt. Die PVK, der PbO-Gehalt in Gew.-% und die Buntheit C* folgen aus der Tabelle.

| PVK (%) | Glasfritte Typ / % PbO | C* |
|---|---|---|
| 33 | / 0 | 18,3 |
| | / 44 | 18,1 |
| | / 65 | 18,3 |
| | / 71 | 18,1 |
| | / 75 | 20,6 |
| | / 80 | 21,5 |
| 44 | / 0 | 21,2 |
| | / 44 | 21,0 |
| | / 65 | 22,3 |
| | / 71 | 22,4 |
| | / 75 | 24,1 |
| | / 80 | 25,1 |
| 55 | / 0 | 22,4 |
| | / 44 | 23,3 |
| | / 65 | 23,5 |
| | / 71 | 24,7 |
| | / 75 | 27,7 |

Die Tabelle zeigt, daß die Buntheit C* ab einem PbO-Gehalt von etwa 71 Gew.-% mit weiter steigendem PbO-Gehalt des Glasflusses in überraschender Weise sprunghaft ansteigt.

**Beispiel 3 / Vergleichsbeipiel (VB)**

Die nachfolgenden orangeroten Dekorfarben (B 3 und VB 3) enthielten ein Zirkon-Cadmiumsulfoselenid-Einschlußpigment und eine Pigmentvolumenkonzentration (PVK) von 50 %. Die Buntheit und PbO-Gehalte folgen aus der Tabelle.

| | Glasfritte Typ / Gew.-% PbO | Buntheit C* (DIN 5033) |
|---|---|---|
| B 3 | E / 80,4 | 46,7 |
| VB 3 | D / 44 | 41,8 |

Durch Erhöhung des PbO-Gehalts des Glasflusses der Dekorfarbe nimmt die Buntheit C* zu.

**Beispiel 4 / Vergleichsbeispiel VB 4**

Die nachfolgenden roten Dekorfarben (Beispiel B 4 und Vergleichsbeispiel VB 4) enthielten jeweils das gleiche Pigment, nämlich ein Zirkon-Cd(S,Se)-Einschlußpigment bei einer PVK von 60 %. Die PbO-Gehalte der verschiedenen Glasfritten der Dekorfarben sowie die C*-Werte sowie Werte für die Laugenresistenz (LR) und den Glanz folgen aus der Tabelle.

|  |  | B 4 | VB 4 |
|---|---|---|---|
| Glasfluß: | Typ | F | E |
|  | % PbO | 83 | 44 |
| C* | | 50,2 | 45,8 |

Durch den erhöhten PbO-Gehalt ist der C*-Wert größer.

**Patentansprüche**

1.  Keramische Dekorfarbe mit erhöhter Buntheit (C), bestehend aus im wesentlichen einem Zirkonpigment vom Wirtsgitter- oder Einschlußtyp und einem Glasfluß aus einer oder mehreren Glasfritten, wobei die Pigmentvolumenkonzentration (PVK) mindestens 30 % beträgt,
    dadurch gekennzeichnet,
    daß der Glasfluß mindestens 71 Gew.-% Bleioxid (PbO) enthält.

2.  Keramische Dekorfarbe nach Anspruch 1,
    dadurch gekennzeichnet,
    daß der PbO-Gehalt des Glasflusses 75 bis 85 Gew.-% PbO enthält.

3.  Keramische Dekorfarbe nach Anspruch 1 oder 2,
    dadurch gekennzeichnet,
    daß die PVK 40 bis 70 % beträgt und das Pigment ausgewählt ist aus der Reihe Zirkon-Vanadium-Blau, Zirkon-Praseodym-Gelb und der gelben bis roten Zirkon-Einschlußpigmente, enthaltend Cadmiumsulfid, Cd-sulfoselenid oder Cd-selenid.

4.  Verfahren zur Herstellung einer keramischen Dekorfarbe mit erhöhter Buntheit gemäß einem der Ansprüche 1 bis 3, umfassend gemeinsames Vermahlen eines Zirkonpigments vom Wirtsgitter oder Einschlußtyp mit einem Glasfluß aus im wesentlichen einer oder mehreren Glasfritten und bei Bedarf Hilfsstoffen, wobei die Pigmentvolumenkonzentration mindestens 30 % beträgt,
    dadurch gekennzeichnet,
    daß man einen Glasfluß mit mindestens 71 Gew.-%, vorzugsweise 75 bis 85 Gew.-%, PbO einsetzt.

5.  Verwendung einer keramischen Dekorfarbe gemäß einem der Ansprüche 1 bis 3 zur Herstellung von keramischen Dekoren mit erhöhter Buntheit C*, insbesondere im Bereich von 1000 bis 1250 °C eingebrannten Dekoren.

Europäisches
Patentamt

## EUROPÄISCHER RECHERCHENBERICHT

Nummer der Anmeldung

EP 98 11 6290

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP 0 419 843 A (DEGUSSA) 3. April 1991 <br> * Seite 2, Zeile 36 - Zeile 45 * <br> * Seite 3, Zeile 18 - Zeile 23 * <br> * Beispiel 1 * <br> --- | 1-5 | C09C1/00 <br> C03C8/20 <br> C03C8/14 |
| A | EP 0 616 974 A (CERDEC AG) <br> 28. September 1994 <br> * Seite 4, Zeile 53 - Seite 5, Zeile 10 * <br> * Anspruch 10 * <br> --- | 1-5 | |
| A | EP 0 202 361 A (HERAEUS GMBH W C) <br> 26. November 1986 <br> * Seite 2, Zeile 5 - Zeile 25 * <br> * Beispiele 1,2 * <br> --- | 1-5 | |
| A | EP 0 459 105 A (ASAHI GLASS CO LTD) <br> 4. Dezember 1991 <br> * Seite 2, Zeile 26 - Zeile 39 * <br> * Seite 3, Zeile 19 - Zeile 20 * <br> * Seite 3, Zeile 35 - Zeile 39 * <br> * Ansprüche 1,4 * <br> --- | 1-5 | **RECHERCHIERTE SACHGEBIETE (Int.Cl.6)** |
| A | EP 0 368 507 A (ENGELHARD CORP) <br> 16. Mai 1990 <br> ----- | 1 | C03C <br> C09C |

Der vorliegende Recherchenbericht wurde für alle Patentansprüche erstellt

| Recherchenort | Abschlußdatum der Recherche | Prüfer |
|---|---|---|
| MÜNCHEN | 27. Januar 1999 | Mini, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**          EP 98 11 6290

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-01-1999

| Im Recherchenbericht angeführtes Patentdokument | Datum der Veröffentlichung | Mitglied(er) der Patentfamilie | | Datum der Veröffentlichung |
|---|---|---|---|---|
| EP 0419843 A | 03-04-1991 | DE | 3932424 C | 06-06-1991 |
| | | AT | 113571 T | 15-11-1994 |
| | | DE | 59007625 D | 08-12-1994 |
| | | ES | 2063216 T | 01-01-1995 |
| | | JP | 3126686 A | 29-05-1991 |
| | | MX | 173913 B | 09-04-1994 |
| EP 0616974 A | 28-09-1994 | DE | 4309975 A | 29-09-1994 |
| | | CZ | 9400224 A | 19-10-1994 |
| EP 0202361 A | 26-11-1986 | DE | 3518523 C | 17-07-1986 |
| EP 0459105 A | 04-12-1991 | JP | 2748647 B | 13-05-1998 |
| | | JP | 3285844 A | 17-12-1991 |
| | | DE | 69103814 D | 13-10-1994 |
| | | DE | 69103814 T | 16-03-1995 |
| | | US | 5244484 A | 14-09-1993 |
| EP 0368507 A | 16-05-1990 | US | 5238881 A | 24-08-1993 |
| | | AU | 4284589 A | 17-05-1990 |
| | | JP | 2192431 A | 30-07-1990 |
| | | MX | 170345 B | 17-08-1993 |

Für nähere Einzelheiten zu diesem Anhang : siehe Amtsblatt des Europäischen Patentamts, Nr. 12/82